(19) Europäisches Patentamt

European Patent Office

Office européen des brevets

(11) **EP 0 946 261 B1**

(12) **EUROPEAN PATENT SPECIFICATION**

(45) Date of publication and mention
of the grant of the patent:
**19.09.2001 Bulletin 2001/38**

(51) Int Cl.[7]: **B01D 53/68**, B01D 53/14

(86) International application number:
**PCT/GB97/03175**

(21) Application number: **97912386.6**

(22) Date of filing: **19.11.1997**

(87) International publication number:
**WO 98/25689 (18.06.1998 Gazette 1998/24)**

(54) **PROCESS FOR REMOVING CHLORINE FROM GAS STREAM**

VERFAHREN ZUR ENTFERNUNG VON CHLOR AUS GASSTRÖMEN

PROCEDE POUR ENLEVER LE CHLORE D'UN COURANT GAZEUX

(84) Designated Contracting States:
**AT BE CH DE DK ES FI FR GB GR IE IT LI LU MC
NL PT SE**

(30) Priority: **09.12.1996 GB 9625526
25.04.1997 US 45013 P
26.04.1997 GB 9708410**

(43) Date of publication of application:
**06.10.1999 Bulletin 1999/40**

(73) Proprietor: **IMPERIAL CHEMICAL INDUSTRIES
PLC
London SW1P 3JF (GB)**

(72) Inventors:
• **STITT, Edmund, Hugh
Middlesbrough Cleveland TS9 7HB (GB)**

• **HANCOCK, Frederick, Ernest
Stockton on Tees Cleveland TS20 1PS (GB)**

(74) Representative:
**Gibson, Sara Hillary Margaret et al
Synetix Intellectual Property Dept.,
Building N, Room N101, Chilton Site,
P.O. Box 1,
Belasis Avenue
Billingham, Cleveland TS23 1LB (GB)**

(56) References cited:
**WO-A-95/21682          DE-A- 2 849 498
US-A- 4 297 333          US-A- 5 157 203**

• **PATENT ABSTRACTS OF JAPAN vol. 095, no.
007, 31 August 1995 & JP 07 096133 A
(SUMITOMO ELECTRIC IND LTD), 11 April 1995,**

## Description

This invention relates to a scrubbing process and in particular to a process for scrubbing chlorine from a gaseous stream containing chlorine. An example of such a chlorine-containing gas stream is the vent gas from a plant producing chlorine: the vent gas often comprises oxygen, carbon dioxide and chlorine remaining as a result of incomplete condensation of the chlorine produced in the chlorine stream resulting from the electrolysis of brine. Other sources of chlorine-containing gas include reactor bleeds and off-gases resulting from the oxidation of chlorinated hydrocarbons; blow-down during chlorine tanker off-loading; pressure relief streams from chlorine processing plants; and primary brine dechlorination through air sparging. For environmental reasons it is desirable to remove essentially all of the chlorine from the gas stream before the latter is discharged to the atmosphere.

The chlorine removal is conventionally effected by scrubbing with an alkaline solution, often caustic soda solution, thereby forming a solution containing hypochlorite ions by the reaction

$$Cl_2 + 2\,OH^- \rightarrow Cl^- + OCl^- + H_2O$$

Thus one hypochlorite ion is formed for each molecule of chlorine scrubbed from the gas. Generally the resulting hypochlorite-containing liquor is treated to decompose the hypochlorite ions into oxygen gas and chloride ions before discharge of the liquor, i.e. according to the reaction

$$2\,OCl^- \rightarrow 2\,Cl^- + O_2.$$

It has been proposed in US 4 297 333 to effect such decomposition of hypochlorite ions in a liquor obtained by the caustic scrubbing of chlorine from a tail gas from an electrolytic chlorine plant by passage of the hypochlorite-containing liquor through a bed of a nickel oxide containing catalyst.

The scrubbing operation is usually operated in a cyclic process: thus the chlorine-containing gas is passed through a scrubber, e.g. a contactor, of which a packed tower is the most common, through which is flowing an aqueous scrubbing liquor generally counter-current to the flow of gas. The scrubbing liquor scrubs the chlorine from the gas giving an effluent liquor laden with chloride and hypochlorite ions. This effluent liquor leaving the scrubber, e.g. tower, is then recycled, usually via a holding tank, pump, and one or more heat exchangers, e.g. to the top of the tower.

The process may be operated as a continuous process, in which case, fresh alkali solution is added, continuously or periodically, before recycle, and part of the circulating liquor is removed, continuously or periodically, as a purge stream. This purge stream, a hypochlorite solution generally containing some excess of alkali, may be recycled, after treatment, for example as aforesaid, to decompose the hypochlorite therein, e.g. to a chlorine production plant. Alternatively the purge may be taken as a hypochlorite product stream or discharged to drain, generally after destruction of the hypochlorite therein.

Alternatively the process may be operated as a batch or semi-continuous process. In such processes, a suitable reservoir, e.g. a holding tank, is provided in the circulation loop and initially this reservoir is charged with fresh alkali. The scrubbing operation is operated until the alkali concentration drops to a predetermined level and then some or all of the liquor in the circulation loop is discharged and replenished with fresh alkali. In some cases the system may be designed such that the scrubbing operation may be halted or switched to another scrubber during such discharge and replenishment of the liquor.

Usually the circulation rate, rate of addition (if any) of fresh alkali, and amount of purge (if any) are such that the circulating liquor has a maximum sodium hypochlorite ion content of the order of 12-15% by weight, although it may be lower as a result of natural decomposition of the hypochlorite or the use of more dilute alkali solutions. Lower hypochlorite concentrations may result where other acid gases such as carbon dioxide, sulphur oxides, and hydrogen chloride are also present in the gas stream and these are co-absorbed with the chlorine.

Attempts to operate with higher hypochlorite concentrations tend to result in the decomposition of hypochlorite with the formation of chlorates

$$3\,NaOCl \rightarrow 2\,NaCl + NaClO_3 \qquad\qquad \text{Reaction 1}$$

The formation of chlorates is generally undesirable since they tend to be explosive and very toxic. Furthermore the rate of reaction 1 is strongly affected by the pH and temperature as well as the hypochlorite concentration. When the alkali is exhausted, i.e. the system is over chlorinated, the rate of chlorate formation is greatly accelerated. Under these conditions hypochlorous acid may be formed by the reaction

$$NaOCl + Cl_2 + H_2O \rightarrow 2\ HOCl + NaCl \qquad\qquad \text{Reaction 2}$$

The following reactions may then also occur

$$2HOCl + NaOCl \rightarrow NaClO_3 + 2HCl \qquad\qquad \text{Reaction 3}$$

$$HCl + NaOCl \rightarrow HOCl + NaCl \qquad\qquad \text{Reaction 4}$$

The excess of chlorine thus favours reaction 2 and hence reaction 3. The rate of reaction 3 is much greater than that of reaction 1 and is strongly exothermic. The reaction thus has a runaway potential. This is normally avoided by providing for an excess of alkali and by cooling and/or by operating at a lower hypochlorite concentration.

In order to minimise the risk of chlorate formation while at the same time enable the system to cater for plant upsets producing an increased amount of chlorine in the gas being treated, it is desirable to operate at a lower circulating hypochlorite content. While this can be achieved by increasing the size of the holding tank and providing for significant increase in the circulation rate and amount of caustic soda added when such increases in the chlorine content occur, such modifications are not attractive economically. It is generally desirable to operate with a sufficient excess of caustic soda that increases in the chlorine content of the feed gas can be accommodated without providing for control of the amount of added caustic soda or of the circulation rate. In the case where changes in chlorine feed rate are due to emergency relief, these changes normally arise too fast for a control system to respond.

In the present invention this problem is overcome by providing for the catalytic decomposition of hypochlorite ions in at least part of the circulating liquor before it is recycled to the scrubber.

Accordingly the present invention provides a process for the scrubbing of chlorine from a chlorine-containing gas comprising contacting said gas with an aqueous feed liquor containing an excess of alkali over that required to react with the chlorine in the gas whereby said chlorine is scrubbed from the gas to provide an effluent liquor containing chloride and hypochlorite ions resulting from the reaction of said chlorine gas with said alkali, and passing at least part of said effluent liquor through a fixed bed of a catalyst for the decomposition of hypochlorite ions whereby hypochlorite ions in said at least part of the effluent liquor are decomposed to oxygen gas and chloride ions to give a treated liquor containing a decreased concentration of hypochlorite ions, characterised in that, for at least part of the time while said gas is being contacted with said aqueous feed liquor, at least part of said treated liquor is recycled as at least part of the aqueous feed liquor.

Thus in the invention, some of the hypochlorite produced from the reaction of chlorine with the alkali is decomposed to chloride ions and oxygen. As a result the standing concentration of hypochlorite in the circulating liquor can be decreased with consequent reduction in the risk of runaway reactions and chlorate formation. Further, as a result of the decreased risk of runaway reactions, it is possible to operate at higher temperatures, thereby reducing the need for cooling of the circulating liquor. Operation at higher temperatures is also beneficial as the rate of decomposition of hypochlorite is increased and so the volume of catalyst required may be relatively small.

Where the process is operated in a batch, or semi-continuous, mode, i.e. where the circulating liquor is periodically discharged and replenished, it may be desirable to effect the discharge by purging all the liquor through the catalyst bed. In this way the discharged liquor has passed through the bed and a substantial proportion of the hypochlorite in the liquor may thus be decomposed prior to disposal.

Where the process is operated continuously with a continuous or periodic purge, it is preferred that the purge stream is taken from the mixture of the treated liquor and the remainder, if any, of the effluent liquor. Conveniently the treated liquor and the remainder of the effluent liquor, if any, are fed to a holding tank or reservoir to which the solution of fresh alkali is added. It is also generally convenient that the purge is taken from the holding tank or from the recycle liquor taken from the holding tank before the latter is fed to the scrubber even though such a purge will inevitably contain some of the fresh alkali. Where the purge stream is recycled to a chlorine production plant, such alkali is not wasted. Where the purge stream is not recycled, but is discharged as a hypochlorite stream or to drain (generally after decomposition of the hypochlorite therein) there may be economic advantages in that the amount of alkali that is discharged in the purge stream may be decreased.

In an alternative process, two scrubbing loops may be employed: while one is on scrubbing duty, spent liquor is discharged from the other loop and then the latter is replenished. Thus the gas is fed alternately to the scrubber of the first loop, during which time aqueous liquor is discharged from the reservoir of the second loop and the reservoir of the second loop is replenished with fresh aqueous alkali solution, and to the scrubber of the second loop, during which time aqueous liquor is discharged from the reservoir of the first loop and the reservoir of the first loop is replenished with fresh aqueous alkali solution; and, for at least part of the period when the gas is being fed to the scrubber of the first loop and for at least part of the period when the gas is being fed to the scrubber of the second loop, at least part of the effluent liquor is passed through the catalyst bed, before or after passage through the reservoir of the respective loop, to give the treated liquor which is mixed with the remainder, if any, of the effluent liquor, and recycled as the aqueous feed liquor fed to the scrubber of the respective loop.

Instead of employing two separate scrubber units, each having its own scrubber and reservoir, a single scrubber unit having two reservoirs may be employed: while one reservoir is supplying the aqueous feed liquor, spent liquor is discharged from the other reservoir and then the latter is replenished. Thus the effluent liquor is recycled alternately via a first reservoir during which time aqueous liquor is discharged from a second reservoir which is then replenished with fresh aqueous alkali solution and via the second reservoir during which time aqueous liquor is discharged from the first reservoir which is then replenished with fresh aqueous alkali solution; and, for at least part of the period when the effluent liquor is recycled from the first reservoir and for at least part of the time when the effluent liquor is recycled from the second reservoir, at least part of the effluent liquor is passed through the catalyst bed, before or after passage through the respective reservoir, to give the treated liquor which is mixed with the remainder, if any, of the effluent liquor, and recycled as the aqueous feed liquor.

In the present invention some or all of the effluent liquor is passed through a fixed bed containing a hypochlorite decomposition catalyst. Unless it is desired that the hypochlorite content of the recycled aqueous liquor fed to the scrubber is maintained at a low level, e.g. 500-5000 ppm by weight, often it is only necessary for a relatively small proportion, for example 2 to 50%, of the effluent liquor to be fed to the catalyst bed. The destruction of hypochlorite ions in a catalyst bed is described in, inter alia, US 5 387 349. In that reference it is indicated that it is necessary to employ a number of catalyst beds in series: however since in the present invention it is not necessary to obtain a catalyst bed effluent liquor having a very low level of hypochlorite ions, it is not necessary to avoid back mixing. As a consequence the apparatus employed may be simpler than that of that reference and a series of catalyst beds may not be needed.

The liquor being treated by the catalyst may be passed upwards through the catalyst bed, i.e. "upflow" where the liquor flow is co-current with the flow of evolved gas, or down through the catalyst bed, i.e. "downflow" where the liquor flow is counter-current to the flow of evolved gas.

The aforesaid US 5 387 349 indicated that it was desirable to operate a downflow system under conditions such that the rate of disengagement of the oxygen produced by the decomposition of hypochlorite is less than 0.05 $m^3$ per second per $m^2$ of gas disengagement surface, i.e. cross sectional area of the catalyst bed. By using an upflow system, it is possible to operate the present invention at higher space velocities than was contemplated by that reference and so relatively small catalyst volumes may be employed. The volume of catalyst is usually such that the liquid hourly space velocity through the catalyst is in the range 0.1 to 1000 $h^{-1}$. An upflow system is desirable where the liquid flow velocity and/or the rate of evolution of gas is relatively large.

Since, in many cases, only a small proportion, e.g. 2 to 50%, of the effluent liquor need be passed through the catalyst, and high space velocities employed, the volume of catalyst can be relatively small.

For example for a plant having an effluent liquor rate of about 100 $m^3$/h, if only 5% of the effluent liquor is passed through the catalyst, the flow rate of liquor passing through the catalyst is 5 $m^3$/h. If the space velocity is 50 $h^{-1}$, the volume of catalyst required is only 100 litres. If the catalyst is disposed as a bed of depth 20 cm, the area of the bed cross section, i.e. the area available for gas disengagement is about 0.5 $m^2$. If a downflow arrangement is employed and problems of the gas evolution disrupting the liquor flow through the catalyst are to be avoided, the rate of gas evolution should not exceed 0.025 $m^3$ per second. This rate of gas evolution is given by the decomposition of about 600 kg/h of sodium hypochlorite and so the scrubber effluent liquor should contain no more than about 12% by weight of sodium hypochlorite. If the effluent liquor has a lower hypochlorite content, the space velocity could be increased, thereby enabling a smaller amount of catalyst to be used.

As indicated above, it is not normally necessary to employ conditions such that the treated liquor has a very low hypochlorite content: typically the treated liquor will have a hypochlorite content in the range 100 to 10000 ppm, i.e. about 0.1 to 10 g/l. Generally it is sufficient for the catalyst to effect decomposition of at least 80%, particularly 90 to 99%, of the hypochlorite in the liquor stream fed to the catalyst bed. The temperature of the liquor fed to the catalyst is typically in the range 10 to 90°C, particularly 20 to 60°C, and especially 30 to 50°C.

In another embodiment, the concentration of hypochlorite in the circulating liquor is maintained at a low level by passing a major proportion, or all, of the effluent liquor through the bed of hypochlorite decomposition catalyst.

The catalytic decomposition of hypochlorite ions by a fixed bed of catalyst is well known. Suitable catalysts include metal oxides such as nickel and/or cobalt oxide, often promoted with oxides of other metals such as copper, aluminium, iron, and magnesium, supported on, or bound together by a suitable binder into, shaped particles. Suitable support and binder materials capable of withstanding the alkaline conditions include certain plastics materials such as polyvinylidene fluoride, and oxidic materials such as magnesia, alpha-alumina and calcium aluminate cement. Particularly suitable catalysts are those described in EP 0 211 530, EP 0 276 044, EP 0 397 342 and WO 97/04870.

The invention is further described with reference to the accompanying drawings wherein

Figure 1 is a diagrammatic flowsheet of a process in accordance with the invention for operation in continuous mode;

Figure 2 is a simplified flowsheet of the process employing two scrubber units operating in batch mode showing one scrubber unit on scrubbing duty and a second scrubber on stand-by;

Figure 3 is a view similar to Figure 2 but showing the second scrubber unit on scrubbing duty and the first scrubber unit undergoing discharge;

Figure 4 is a simplified flowsheet of the process employing one scrubbing unit having two reservoirs operating in batch mode with one reservoir in the scrubbing loop and a second reservoir on stand-by;

Figure 5 is a view similar to Figure 4 but showing the second reservoir in the scrubbing loop and the first reservoir undergoing discharge;

Figure 6 is a view similar to Figure 1 of the flowsheet for a process for operation in semi-continuous mode.

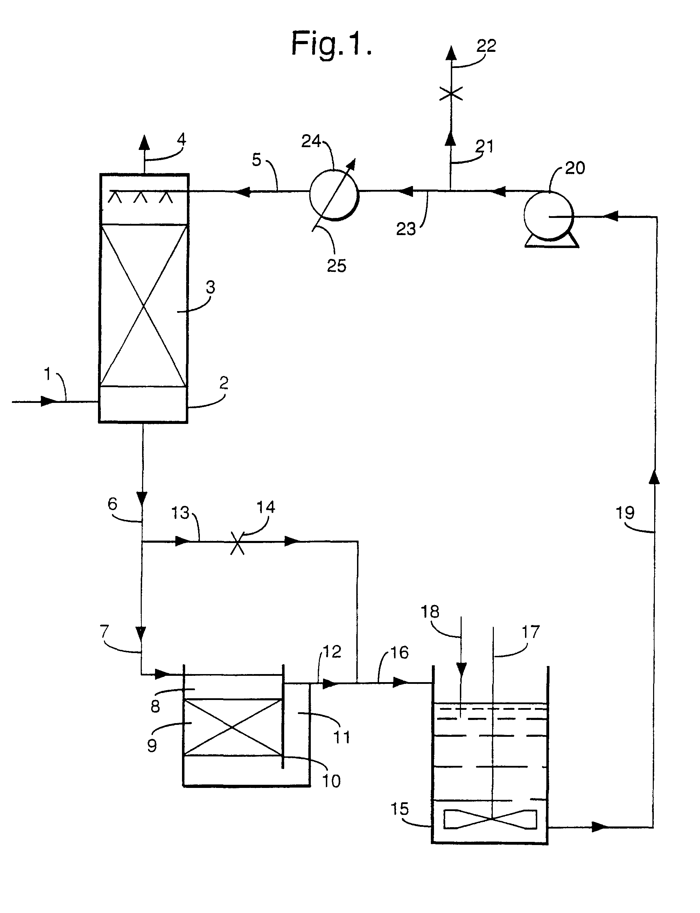

Referring to the Figure 1, a chlorine-containing gas, e.g. vent gas from a chlorine production plant, is fed via line 1 to a column 2 containing a packing 3. The gas flows up through the column 2 and leaves the column at the upper end via line 4. An aqueous feed liquor containing alkali is fed to the upper end of the column via line 5. The liquor flows down through the packing 3 counter-current to the flow of gas. On contact with the gas, the scrubbing liquor scrubs the chlorine from the gas forming chloride and hypochlorite ions. The laden scrubber effluent liquor is taken from the bottom of the column via line 6. Part of the scrubber effluent liquor is fed, under the action of gravity, via line 7 to a vessel 8 containing a fixed bed 9 of a catalyst for the decomposition of hypochlorite. The liquor fed to vessel 8 flows, under the action of gravity, down through bed 9 and then under a baffle 10, up a riser column 11, and then leaves vessel 8 via overflow 12. In this embodiment, the catalyst bed is thus operating in the downflow mode. It will be appreciated that an upflow bed could alternatively be employed.

The remainder of the scrubber effluent liquor bypasses the vessel 8 via a bypass line 13. A valve 14 is provided in bypass line 13 to control the proportion of the scrubber effluent liquor that flows through the bypass. The catalyst bed effluent liquor, in line 12, and the portion of the scrubber effluent liquor that bypasses vessel 8 via line 13 and valve 14, are united and fed to a holding tank 15 via line 16. The gas evolved from the catalyst bed 9 may be vented directly to the atmosphere or added to the gas fed to, or leaving, the scrubbing column 2. Alternatively the evolved gas can be fed to the holding tank 15 from which the gas may be vented. Tank 15 is provided with a stirrer 17 and a supply 18 of a solution of fresh alkali. In some cases stirrer 17 may be omitted as the circulating flow of the liquor may provide adequate mixing. The scrubber effluent liquor bypassing the catalyst bed, the catalyst bed effluent liquor, and fresh alkali are mixed in tank 15. A stream of liquor is withdrawn from tank 15 via line 19 by a circulating pump 20. Part of the liquor delivered from the pump is discharged as a purge stream via line 21. A valve 22 is disposed in line 21 to control the proportion of the liquor delivered from the pump 20 that is purged from the system. The remainder of the liquor delivered by the pump 20 is fed via line 23 and a heat exchanger 24 to line 5 to form the aqueous feed liquor fed to the column 2. The temperature of the circulating liquor is controlled by a suitable heat exchange medium flowing through the heat exchanger 24 via line 25.

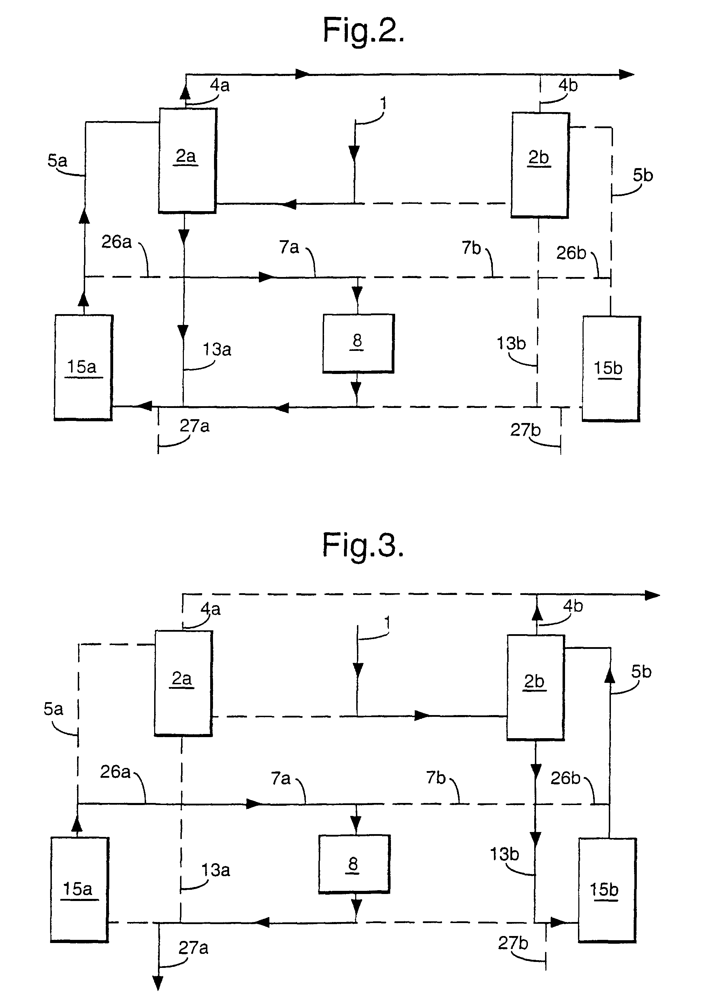

In the embodiment of Figures 2 and 3, the components of Figure 1 are shown simplified and the pumps and valves etc. are omitted for simplicity. Lines not in use are shown dotted.

In this embodiment, two scrubbing loops are shown, with a single catalyst bed unit. In Figure 2, the first loop is on scrubbing duty: thus the gas to be scrubbed is fed via line 1 to the first scrubbing column 2a to which the aqueous liquor is fed via line 5a from a holding tank 15a. The laden scrubber effluent liquor from the bottom of tower 2a is fed via line 7a to the catalyst bed 8 from whence it returns to the holding tank 15a. Part of the scrubber effluent liquor may bypass the catalyst bed via line 13a if desired. The second scrubbing loop is idle, i.e. on stand-by duty.

When the liquor in the first scrubbing loop requires replenishment, the second scrubbing loop is brought into operation as shown in Figure 3. Thus the liquor from the second holding tank 15b is fed to the top of the second scrubbing tower 2b, and the flow of gas switched from tower 2a to tower 2b. The laden scrubber effluent liquor from tower 2b is returned to holding tank 15b via bypass line 13b. While scrubbing is occurring in the second scrubbing loop, the contents of holding tank 15a are discharged via a bypass line 26a and line 7a through the catalyst bed 8 and thence to drain via line 27a. When sufficient spent liquor has been discharged from holding tank 15a, the flow through bypass 26a is stopped and tank 15a refilled with fresh aqueous alkali solution via a suitable line (not shown). When the discharge of holding tank 15a has been completed, the flow of laden scrubber effluent liquor from tower 2b through line 7b, catalyst bed 8 and thence return to holding tank 15b can be commenced, and the flow of the laden scrubber effluent liquor through bypass line 13b can be decreased or stopped. When replenishment of holding tank 15a is completed, the first scrubbing loop is thus on stand-by duty in readiness for the discharge and replenishment of holding tank 15b.

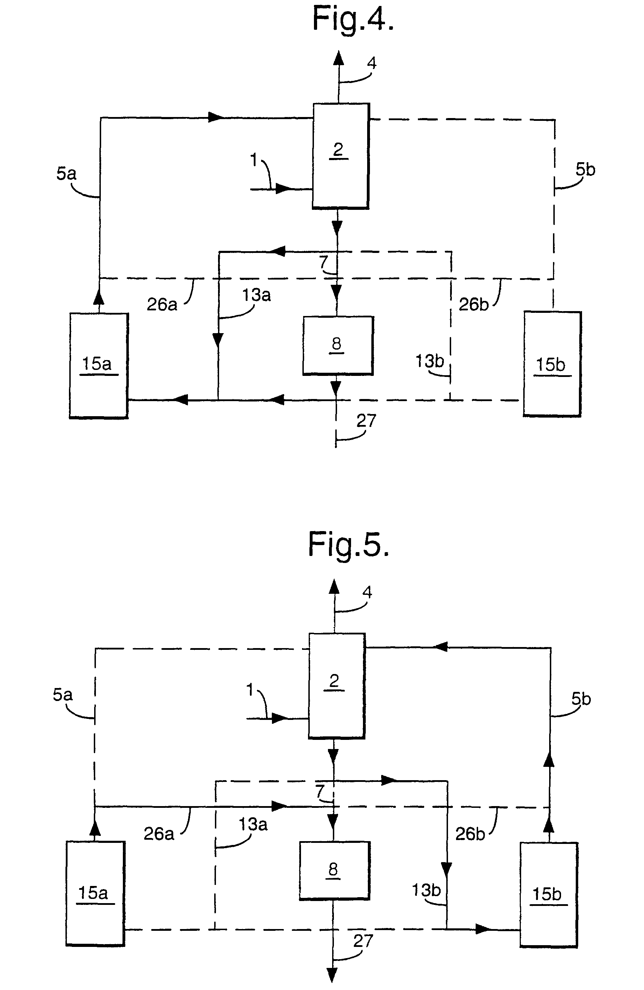

In the embodiment of Figures 4 and 5 the operation is similar to that of the embodiment of Figures 2 and 3 but instead of there being two separate scrubber units, each with its own loop, a single scrubber is employed with two reservoirs or holding tanks 15a and 15b.

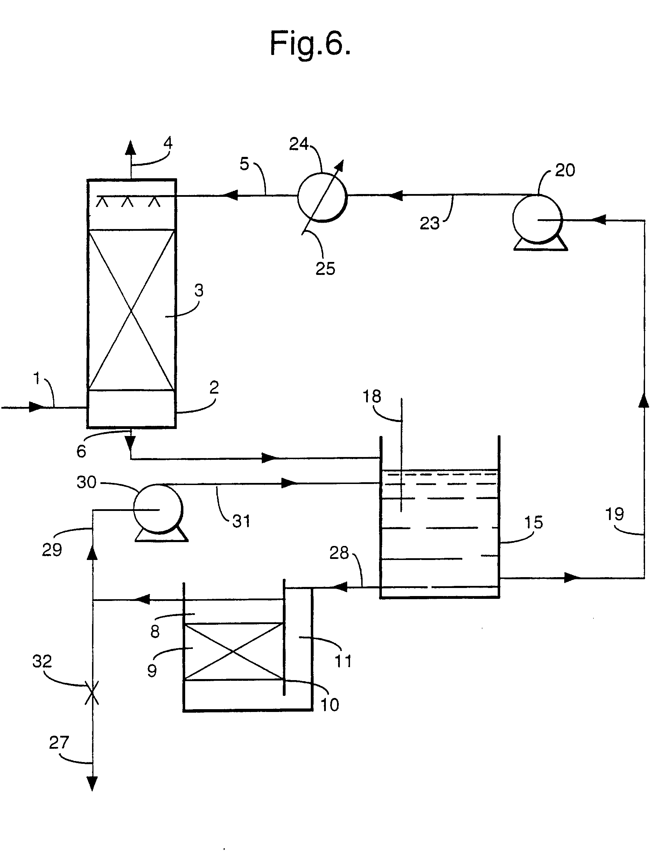

In the embodiment of Figure 6, an arrangement similar to that of Figure 1 is employed. However, the scrubber effluent liquor is fed directly via line 6 to the holding tank 15. A stream of the scrubber effluent liquor is taken from the lower end of the holding tank via line 28 and fed to the catalyst bed. In this embodiment, the catalyst bed is shown in the upflow mode: thus the liquor flows down the channel 11 between the wall of the vessel 8 and the baffle 10 and then up through the catalyst bed 9. The catalyst bed effluent liquor is fed, via line 29 to a recirculation pump 30 and thence returned to the holding tank via line 31. Instead of providing the purge via line 21 from pump 20, a purge stream 27 is provided from the catalyst bed effluent. Flow of this purge stream is controlled to valve 32.

The system of Figure 4 is operated in a semi-continuous mode. Thus at the start of a cycle, the holding tank is charged with fresh alkali solution, e.g. caustic soda solution, via line 18. For a period of time the system is operated as described above with part of the liquor from tank 15 being fed through catalyst bed 9 and returned to holding tank 15 via line 31. During this period, valve 32 is closed. When the concentration of free alkali in the holding tank has dropped to a predetermined level, valve 32 is opened and pump 30 stopped so that all the catalyst bed effluent liquor is discharged from the system. When the inventory of liquor in the holding tank 15 has fallen to a predetermined level, the valve 32 is closed, pump 30 re-started, and fresh aqueous alkali solution added through line 18 until the holding tank is recharged. During the discharge and re-charging of holding tank 15, the flow of gas through scrubber 3, and the flow of liquor through lines 19, 23,5 and 6 is continued so that absorption of the chlorine from the feed gas is not interrupted.

The invention is illustrated by the following calculated examples.

Example 1

In this example the flowsheet of Figure 1 is employed. The aqueous feed liquor is fed to the scrubber at the rate of about 8 te/h and is used to treat a chlorine-containing gas stream fed to the scrubber 2. A portion (9%) of the liquor delivered by pump 20 is taken as the purge. A portion (5%) of the scrubber effluent liquor is fed via line 7 to a bed of a nickel oxide-containing hypochlorite decomposition catalyst. A solution containing 300 g/l of caustic soda is fed via line 18 at a rate of 0.68 te/h. Assuming that 99% of the hypochlorite in the feed to the catalyst bed is decomposed, the steady state flow rates and concentrations of the liquor components for chlorine feed rates of 100 and 120 kg/h (i. e. 0.10 and 0.12 te/h respectively) are as set out in the following table.

| | Flow rate (te/h) | Concentration (wt %) | | |
|---|---|---|---|---|
| | | NaOCl | NaOH | NaCl |
| Chlorine in gas 1 | 0.10 | - | - | - |
| Scrubber feed 5 | 7.76 | 8.66 | 5.64 | 14.67 |
| Scrubber effluent 6 | 7.86 | 9.88 | 4.14 | 15.53 |
| Catalyst effluent 12 | 0.38 | 0.10 | 4.23 | 23.71 |
| Purge 21 | 0.77 | 8.66 | 5.64 | 14.67 |
| Chlorine in gas 1 | 0.12 | - | - | - |
| Scrubber feed 5 | 7.95 | 10.15 | 2.64 | 17.19 |
| Scrubber effluent 6 | 8.07 | 11.56 | 0.93 | 18.16 |
| Catalyst effluent 12 | 0.39 | 0.12 | 0.95 | 27.83 |
| Purge 21 | 0.79 | 10.15 | 2.64 | 17.19 |

It is seen that a 20% increase in the chlorine feed rate causes the hypochlorite content of the recycle liquor to increase from 8.66 % to 10.15%.

By way of comparison if the catalyst bed is omitted, the flow rates and concentrations are calculated to be as shown in the following table.

| | Flow rate (te/h) | Concentration (wt %) | | |
|---|---|---|---|---|
| | | NaOCl | NaOH | NaCl |
| Chlorine in gas 1 | 0.10 | - | - | - |

(continued)

|  | Flow rate (te/h) | Concentration (wt %) | | |
|---|---|---|---|---|
|  |  | NaOCl | NaOH | NaCl |
| Scrubber feed 5 | 7.85 | 13.52 | 5.58 | 10.62 |
| Scrubber effluent 6 | 7.95 | 14.67 | 4.09 | 11.52 |
| Purge 21 | 0.78 | 13.52 | 5.58 | 10.62 |
| Chlorine in gas 1 | 0.12 | - | - | - |
| Scrubber feed 5 | 8.05 | 15.82 | 2.61 | 12.42 |
| Scrubber effluent 6 | 8.17 | 17.13 | 0.92 | 13.45 |
| Purge 21 | 0.80 | 15.82 | 2.61 | 12.42 |

In the absence of the catalyst, it is seen that the 20% increase in the chlorine feed rate causes the hypochlorite concentration in the recycle liquor to increase from 13.5% to 15.8%.

Examples 2-6

In these examples, the arrangement of Figure 1 is employed. The aqueous feed liquor is fed to the scrubber at the rate of about 180 te/h and is used to treat a chlorine-containing gas stream fed to the scrubber 2. The gas feed rate is such that 360 kg/h of chlorine is fed to the scrubber. Caustic soda solution (containing 20% by weight of sodium hydroxide) is continuously added via line 18 at a rate of 1.8 te of solution per hour, and an appropriate amount of liquor is purged from the system via line 22 to maintain the liquid inventory constant. The following table shows the effect of various volumes of hypochlorite decomposition catalyst, and various proportions of the scrubber effluent liquor fed to the catalyst, on the hypochlorite concentration of the aqueous feed liquor fed to the scrubber, assuming that the concentration of caustic soda in the circulating liquor is maintained at about 4.6% by weight and the catalyst bed is operated at 40°C.

| Example | 2 | 3 | 4 | 5 | 6 |
|---|---|---|---|---|---|
| Catalyst volume ($m^3$) | 0.80 | 0.96 | 1.80 | 5.00 | 5.00 |
| Proportion of scrubber effluent fed to catalyst (%) | 25 | 10 | 25 | 10.4 | 50 |
| Hypochlorite concentration (wt%) | 3.23 | 3.23 | 1.69 | 1.69 | 0.60 |

By way of comparison, if the catalyst is omitted, the hypochlorite concentration is 12.25% by weight.

Examples 7-10

In these examples, a semi-continuous system of the type shown in Figure 6 is employed. The aqueous feed liquor is fed to the scrubber at the rate of 20 $m^3$/h and is used to treat a chlorine-containing gas stream fed to the scrubber 2. The gas feed rate is such that 18 kg/h of chlorine is fed to the scrubber. The volume of the holding tank 15 is 5.5 $m^3$.

The operating cycle, starting from the completion of re-charging of the holding tank 15 (at which stage the caustic soda content of the liquor in the holding tank is about 14.4% by weight), is 24 hours operation followed by discharge of approximately 80% of the holding tank contents, via the catalyst bed, and then re-charging the holding tank with fresh aqueous caustic soda solution. The time taken for discharge depends on the rate of feed to the catalyst bed: this is assumed to be constant throughout the operating cycle. For simplicity it is assumed that the time for re-charging is the same as the time taken for discharging.

During the 24 period of operation before commencement of the discharge, the caustic soda concentration of the liquor in the holding tank steadily falls as the chlorine is absorbed with the formation of sodium hypochlorite and sodium chloride. However, because of the decomposition of the hypochlorite in the catalyst bed, the hypochlorite concentration rises only slowly and then levels out. At the end of the 24 hour period, discharge of 4 $m^3$ of the holding tank contents is commenced by opening valve 32 and stopping pump 30. At this stage the caustic soda content of the liquor in the holding tank has fallen to about 6.9% by weight. During the discharge period the caustic soda concentration continues to fall since absorption of chlorine is still proceeding. Also, since the catalyst bed effluent liquor is no longer being recycled to the holding tank, the hypochlorite concentration of the holding tank contents, and hence of the aqueous feed liquor fed to the scrubber rises. When the discharge of 4 $m^3$ of the holding tank contents has been completed, valve 32 is closed and pump 30 re-started to re-commence recycle of the catalyst bed effluent liquor. At the same time the charging of fresh aqueous caustic soda solution (containing 20% by weight of sodium hydroxide) via line 18 to the holding tank is commenced.

The following table shows the effect of various volumes of hypochlorite decomposition catalyst, and rates of feed to the catalyst bed, on the average and maximum hypochlorite concentration of the liquor fed to the scrubber, and on the average hypochlorite concentration of the effluent from the catalyst bed during the discharge stage of the cycle.

By way of comparison, the table also quotes the data (Comp) for the case where there is no catalyst, i.e. in this case liquor only flows through line 28 (directly to purge line 27) during the discharge stage.

In Examples 7, 8 and the comparison (no catalyst) the total cycle was 32 hours, i.e. 4 hours discharge, 4 hours re-charge, and then 24 hours operation before commencement of the next discharge. In Example 9, the discharge and re-charging times were each 2 hours, giving a total cycle time of 28 hours.

| Example | | 7 | 8 | 9 | Comp |
|---|---|---|---|---|---|
| catalyst volume ($m^3$) | | 0.10 | 0.25 | 0.25 | 0 |
| line 28 flow rate ($m^3$/h) | | 1 | 1 | 2 | 1 |
| hypochlorite concentration (% by weight) | scrubber feed (avg.) | 2.4 | 1.7 | 1.1 | 9.4 |
| | scrubber feed (max.) | 4.1 | 3.4 | 2.0 | 13.4 |
| | line 27 (avg. during discharge) | 1.2 | 0.2 | 0.4 | 13.4 |

**Claims**

1. A process for the scrubbing of chlorine from a chlorine-containing gas comprising contacting said gas with an aqueous feed liquor containing an excess of alkali over that required to react with the chlorine in the gas whereby said chlorine is scrubbed from the gas to provide an effluent liquor containing chloride and hypochlorite ions resulting from the reaction of said chlorine gas with said alkali, and passing at least part of said effluent liquor through a fixed bed of a catalyst for the decomposition of hypochlorite ions whereby hypochlorite ions in said at least part of the effluent liquor are decomposed to oxygen gas and chloride ions to give a treated liquor containing a decreased concentration of hypochlorite ions, **characterised in that**, for at least part of the time while said gas is being contacted with said aqueous feed liquor, at least part of said treated liquor is recycled as at least part of the aqueous feed liquor.

2. A process according to claim 1, wherein the process is operated continuously with fresh alkali solution being added, continuously or intermittently, to the aqueous feed liquor, and continuously or intermittently discharging part of the effluent liquor, before or after passage through the catalyst bed, as a purge stream.

3. A process according to claim 2 wherein the purge stream is taken from the mixture of the treated liquor and the remainder, if any, of the effluent liquor.

4. A process according to claim 1 wherein the aqueous feed liquor is taken from a reservoir, to which the effluent liquor is returned, and periodically discharging part of the contents of the reservoir as a purge and then replenishing the reservoir with fresh aqueous alkali solution.

5. A process according to claim 4 wherein the effluent liquor is recycled alternately (i) via a first reservoir while aqueous liquor is discharged from a second reservoir which is then replenished with fresh aqueous alkali solution and (ii) via the second reservoir while aqueous liquor is discharged from the first reservoir which is then replenished with fresh aqueous alkali solution, and, for at least part of the period when the effluent liquor is recycled from the first reservoir and for at least part of the time when the effluent liquor is recycled from the second reservoir, passing at least part of the effluent liquor, before or after passage through the respective reservoir, through the catalyst bed to give the treated liquor which is mixed with the remainder, if any, of said effluent liquor, and recycled as the aqueous feed liquor.

6. A process according to claim 5 wherein two scrubber loops are employed, each loop having a scrubber and a reservoir, and, alternately (i) feeding the gas to the scrubber of the first loop, discharging aqueous liquor from the reservoir of the second loop and replenishing the reservoir of the second loop with fresh aqueous alkali solution, and ii) feeding said gas to the scrubber of the second loop, discharging the aqueous liquor from the reservoir of the first loop, and replenishing said reservoir of the first loop with fresh aqueous alkali solution; and, for at least part of the period when the gas is being fed to the scrubber of the first loop and for at least part of the period when the gas is being fed to the scrubber of the second loop, passing at least part of the effluent liquor, before or after passage through the reservoir of the respective loop, through the catalyst bed to give the treated liquor which is mixed with the remainder, if any, of said effluent liquor, and recycled as the aqueous feed liquor fed to the scrubber of the respective loop.

7. A process according to any one of claims 4 to 6 wherein the reservoir contents are discharged through the catalyst bed.

8. A process according to claim 7 wherein, during the period when aqueous liquor is being discharged from the reservoir, the effluent liquor is not passed through the catalyst bed.

9. A process according to any one of claims 1 to 8 wherein, during the period when effluent liquor is fed to the catalyst bed, 2 to 50% of the effluent liquor is fed to the catalyst bed.

10. A process according to any one of claims 1 to 9 wherein the liquid hourly space velocity through the catalyst is in the range 0.1 to 1000 h$^{-1}$.

**Patentansprüche**

1. Verfahren zum Waschen von Chlor aus einem Chlor-enthaltenden Gas, umfassend Inkontaktbringen des Gases mit einer wäßrigen Beschickungsflüssigkeit, die einen Überschuß an Alkali gegenüber dem Alkali, das zur Umsetzung mit dem Chlor in dem Gas notwendig ist, enthält, wodurch das Chlor aus dem Gas gewaschen wird unter Bereitstellung einer ausfließenden Flüssigkeit, die Chlorid- und Hypochlorit-Ionen, welche aus der Reaktion des Chlorgases mit dem Alkali resultieren, enthält, und Leiten mindestens eines Teils der ausfließenden Flüssigkeit durch ein Festbett eines Katalysators zur Zersetzung von Hypochlorit-Ionen, wodurch Hypochlorit-Ionen in dem mindestens einen Teil der ausfließenden Flüssigkeit zu Sauerstoffgas und Chlorid-Ionen zersetzt werden, wobei eine behandelte Flüssigkeit erhalten wird, die eine verringerte Konzentration an Hypochlorit-Ionen hat, **dadurch gekennzeichnet, daß** während mindestens eines Teils der Zeit, während der das Gas mit der wäßrigen Beschickungsflüssigkeit in Kontakt gebracht wird, mindestens ein Teil der behandelten Flüssigkeit als mindestens ein Teil der wäßrigen Beschickungsflüssigkeit in den Kreislauf zurückgeführt wird.

2. Verfahren nach Anspruch 1, wobei das Verfahren kontinuierlich durchgeführt wird, wobei kontinuierlich oder diskontinuierlich frische Alkalilösung der wäßrigen Beschickungsflüssigkeit zugesetzt wird und kontinuierlich oder diskontinuierlich ein Teil der ausfließenden Flüssigkeit vor oder nach Durchgang durch das Katalysatorbett als Spülstrom entnommen wird.

3. Verfahren nach Anspruch 2, wobei der Spülstrom aus dem Gemisch aus der behandelten Flüssigkeit und dem Rest, wenn es einen gibt, der ausfließenden Flüssigkeit entnommen wird.

4. Verfahren nach Anspruch 1, wobei die wäßrige Beschickungsflüssigkeit aus einem Vorratsbehälter entnommen wird, zu dem die ausfließende Flüssigkeit zurückgeführt wird, und ein Teil des Inhalts des Vorratsbehälters regelmäßig als Spülung entnommen wird und der Vorratsbehälter dann mit frischer wäßriger Alkalilösung nachgefüllt wird.

5. Verfahren nach Anspruch 4, wobei die ausfließende Flüssigkeit in den Kreislauf zurückgeführt wird, und zwar abwechselnd (i) via einen ersten Vorratsbehälter, während wäßrige Flüssigkeit aus einem zweiten Vorratsbehälter entnommen wird, der dann mit frischer wäßriger Alkalilösung wieder aufgefüllt wird, und (ii) via den zweiten Vorratsbehälter, während wäßrige Flüssigkeit aus dem ersten Vorratsbehälter entnommen wird, der dann mit frischer wäßriger Alkalilösung wieder aufgefüllt wird; und für mindestens einen Teil des Zeitraums, während dem die ausfließende Flüssigkeit aus dem ersten Vorratsbehälter in den Kreislauf zurückgeführt wird, und für mindestens einen Teil des Zeitraums, während dem die ausfließende Flüssigkeit aus dem zweiten Vorratsbehälter in den Kreislauf zurückgeführt wird, mindestens ein Teil der ausfließenden Flüssigkeit - vor oder nach Durchgang durch den jeweiligen Vorratsbehälter - durch das Katalysatorbett geführt wird, wobei die behandelte Flüssigkeit, die mit dem Rest, wenn es einen gibt, der ausfließenden Flüssigkeit vermischt ist, erhalten wird, und als wäßrige Beschickungsflüssigkeit in den Kreislauf zurückgeführt wird.

**6.** Verfahren nach Anspruch 5, wobei zwei Waschschleifen verwendet werden, jede Schleife einen Scrubber und einen Vorratsbehälter hat und abwechselnd (i) das Gas zu dem Scrubber der ersten Schleife geführt wird, wäßrige Flüssigkeit aus dem Vorratsbehälter der zweiten Schleife entnommen wird und der Vorratsbehälter der zweiten Schleife wieder mit frischer wäßriger Alkalilösung aufgefüllt wird und (ii) das Gas zu dem Scrubber der zweiten Schleife geführt wird, die wäßrige Flüssigkeit aus dem Vorratsbehälter der ersten Schleife entnommen wird und der Vorratsbehälter der ersten Schleife wieder mit frischer wäßriger Alkalilösung aufgefüllt wird, und für mindestens einen Teil des Zeitraums, während dem das Gas zu dem Scrubber der ersten Schleife geführt wird, und für mindestens einen Teil des Zeitraums, während dem das Gas zu dem Scrubber der zweiten Schleife geführt wird, mindestens ein Teil der ausfließenden Flüssigkeit - vor oder nach Durchgang durch den Vorratsbehälter der jeweiligen Schleife - durch das Katalysatorbett geführt wird, wodurch die behandelte Flüssigkeit erhalten wird, die mit dem Rest, wenn es einen gibt, der ausfließenden Flüssigkeit vermischt ist, und als die wäßrige Ausgangsflüssigkeit, die dem Scrubber der jeweiligen Schleife zugeführt wird, in den Kreislauf zurückgeführt wird.

**7.** Verfahren nach einem der Ansprüche 4 bis 6, wobei die Vorratstank-Inhalte durch das Katalysatorbett entnommen werden.

**8.** Verfahren nach Anspruch 7, wobei während des Zeitraums, während dem wäßrige Flüssigkeit aus dem Vorratsbehälter entnommen wird, die ausfließende Flüssigkeit nicht durch das Katalysatorbett geführt wird.

**9.** Verfahren nach einem der Ansprüche 1 bis 8, wobei während des Zeitraums, während dem ausfließende Flüssigkeit zu dem Katalysatorbett geführt wird, 2 bis 50 % der ausfließenden Flüssigkeit zu dem Katalysatorbett geführt werden.

**10.** Verfahren nach einem der Ansprüche 1 bis 9, wobei die Stunden-Raumgeschwindigkeit der Flüssigkeit durch den Katalysator im Bereich von 0,1 bis 1000 h$^{-1}$ liegt.

**Revendications**

**1.** Procédé pour éliminer le chlore d'un gaz contenant du chlore, comprenant la mise en contact de ce gaz avec une liqueur aqueuse d'alimentation contenant un excès d'un agent alcalin par rapport à la quantité requise pour réagir avec le chlore présent dans le gaz, ce chlore étant ainsi éliminé du gaz en donnant une liqueur effluente contenant des ions chlorure et hypochlorite résultant de la réaction dudit chlore gazeux avec ledit agent alcalin, et le passage d'au moins une partie de ladite liqueur effluente à travers un lit fixe d'un catalyseur pour la décomposition des ions hypochlorite, lesdits ions hypochlorite présents dans ladite au moins une partie de la liqueur effluente étant ainsi décomposés en oxygène gazeux et ions chlorure, ce qui donne une liqueur traitée contenant une concentration réduite d'ions hypochlorite, **caractérisé en ce que**, pendant au moins une partie du temps pendant lequel ledit gaz est mis en contact avec ladite liqueur aqueuse d'alimentation, au moins une partie de ladite liqueur traitée est recyclée en tant qu'au moins une partie de la liqueur aqueuse d'alimentation.

**2.** Procédé suivant la revendication 1, qui est mis en oeuvre de manière continue avec addition, de manière continue ou intermittente, de solution d'agent alcalin fraîche à la liqueur aqueuse d'alimentation, et en déchargeant de manière continue ou intermittente une partie de la liqueur effluente, avant ou après le passage à travers le lit de catalyseur, en tant que courant de purge.

**3.** Procédé suivant la revendication 2, dans lequel le courant de purge est évacué du mélange de la liqueur traitée et du reste, s'il en existe un quelconque, de la liqueur effluente.

**4.** Procédé suivant la revendication 1, dans lequel la liqueur aqueuse d'alimentation est extraite d'un réservoïr, auquel la liqueur effluente est renvoyée, en déchargeant périodiquement une partie du contenu du réservoir comme purge, puis en renouvelant le contenu du réservoir avec de la solution aqueuse d'agent alcalin fraîche.

**5.** Procédé suivant la revendication 4, dans lequel la liqueur effluente est recyclée alternativement (i) par un premier réservoir, tandis qu'une liqueur aqueuse est déchargée d'un second réservoir dont le contenu est ensuite soumis à un renouvellement avec de la solution aqueuse d'agent alcalin fraîche, et (ii) par le second réservoir, tandis qu'une liqueur aqueuse est déchargée du premier réservoir dont le contenu est ensuite renouvelé avec de la solution aqueuse d'agent alcalin fraîche et, pendant au moins une partie de la période pendant laquelle la liqueur effluente est recyclée à partir du premier réservoir et pendant au moins une partie du temps pendant lequel la liqueur effluente est recyclée à partir du second réservoir, au moins une partie de la liqueur effluente, avant ou après le passage à travers le réservoir respectif, est passée à travers le lit de catalyseur pour obtenir la liqueur traitée qui est mélangée au reste, s'il en existe un quelconque, de ladite liqueur effluente, et recyclée en tant que liqueur aqueuse d'alimentation.

**6.** Procédé suivant la revendication 5, dans lequel deux boucles d'épurateur sont utilisées, chaque boucle comprenant un épurateur et un réservoir, et on effectue alternativement (i) l'introduction du gaz dans l'épurateur de la première boucle, le déchargement de liqueur aqueuse à partir du réservoir de la seconde boucle et le renouvellement du contenu du réservoir de la seconde boucle avec de la solution aqueuse d'agent alcalin fraîche, et (ii) l'introduction dudit gaz dans l'épurateur de la seconde boucle, le déchargement de la liqueur aqueuse à partir du réservoir dans la première boucle, et le renouvellement du contenu dudit réservoir de la première boucle avec de la solution aqueuse d'agent alcalin fraîche ; et, pendant au moins une partie de la période de temps pendant laquelle le gaz est introduit dans l'épurateur de la première boucle et pendant au moins une partie de la période de temps pendant laquelle le gaz est introduit dans l'épurateur de la seconde boucle, le passage d'au moins une partie de la liqueur effluente, avant ou après le passage à travers le réservoir de la boucle respective, à travers le lit de catalyseur, ce qui donne la liqueur traitée qui est mélangée au reste, s'il en existe un quelconque, de ladite liqueur effluente et est recyclée en tant que liqueur aqueuse d'alimentation amenée à l'épurateur de la boucle respective.

**7.** Procédé suivant l'une quelconque des revendications 4 à 6, dans lequel le contenu du réservoir est déchargé à travers le lit de catalyseur.

**8.** Procédé suivant la revendication 7, dans lequel, au cours de la période de temps pendant laquelle la liqueur aqueuse est déchargée du réservoir, la liqueur effluente n'est pas passée à travers le lit de catalyseur.

**9.** Procédé suivant l'une quelconque des revendications 1 à 8, dans lequel, au cours de la période de temps pendant laquelle la liqueur effluente est amenée au lit de catalyseur, une quantité de 2 à 50 % de la liqueur effluente est amenée au lit de catalyseur.

**10.** Procédé suivant l'une quelconque des revendications 1 à 9, dans lequel la vitesse spatiale horaire de liquide à travers le catalyseur est comprise dans l'intervalle de 0,1 à 1000 $h^{-1}$.

# Fig.1.

# Fig.2.

# Fig.3.

# Fig.4.

# Fig.5.

# Fig.6.